# EUROPEAN PATENT SPECIFICATION

(11) **EP 1 633 555 B1**
(45) Date of publication and mention of the grant of the patent: **20.05.2020**
(21) Application number: 04736828.7
(22) Date of filing: 14.06.2004
(51) Int. Cl.: B32B 5/22

(54) **MULTILAYER HIGH DENSITY MINERAL FIBER PANEL AND APPARATUS AND PROCESS FOR MANUFACTURING SAME**
MEHRSCHICHTIGE, HOCHDICHTE MINERALFASERPLATTE, VORRICHTUNG UND VERFAHREN ZUR HERSTELLUNG DER PLATTE
PANNEAU MULTICOUCHE DE FIBRES MINERALES DE HAUTE DENSITE, APPAREIL ET PROCEDE DE FABRICATION DE CE PANNEAU

(30) Priority: 16.06.2003 SI 200300147
(43) Date of publication of application: 15.03.2006
(73) Proprietor: Termo, D.D., Industrija Termicnih Izolacij, Skofja Loka, 4220 Skofja Loka (SI)
(72) Inventor: LUZNIK, Tomaz, 4220 Skofja Loka (SI); CUKROV, Marjan, 1236 Trzin (SI); SEBENIK, Gorazd, 1351 Brezovica (SI); BRADESKO, Franc, 4220 Skofja Loka (SI)
(74) Representative: ARC-IP
(86) International application number: PCT/SI2004/000023
(87) International publication number: WO 2004/110748

(56) References cited:
- EP-A- 0 773 266
- EP-A2- 0 588 374
- WO-A-00/73600
- DE-A1- 2 444 091

## Description

### Technical Field

The invention relates to a multilayer high density mineral fiber panel with admixed organic and inorganic materials and to an apparatus and process for manufacturing same. The panel of the invention may be used in construction, in the production of thermal insulation building panels, in shipbuilding, in soundproof systems and similar applications.

### Technical Problem

Typical mineral fiber products are comparatively soft and highly porous materials to which a binder, an anti-dust agent and a water repellent are added. In the production of thermal insulation materials from mineral fibers, residues of mineral fibers are left over as a result of clipping, grinding or separating faulty panels, which residues may be used in granular form as insulating material. Mineral wool residues may also be reintroduced as an additive into the process for producing thermal insulation materials from mineral fibers, or they may be returned to the dome furnace in the form of bricks, and re-melted. Granular insulation material may be used in the building industry but only in closed compartments. By returning the granular material into the manufacturing process, on the other hand, the mechanical properties of the final products inevitably deteriorate regardless of the form in which it is reintroduced into the process.

Lately a demand has arisen for harder materials which could be used as materials for reinforcing building structures or as cover panels for roof and partition structures. Also, in the field of sound-absorptive panels, there has been a rising need for reinforcements by means of which better mechanical properties could be achieved and existing--materials could be made sound-absorptive at the same time. Said demands for hard panels for the purpose of improving the mechanical properties of the basic materials coincided with the possibility of manufacturing hard panels from granulated material which is obtained as a byproduct or waste product in the process. Utilizing the granulate directly as a product of its own has proven more advantageous, given that returning it into the production process results in inconvenient side effects such as deterioration of mechanical properties, deterioration in thermal insulation capacity, increase of chloride content in the final products etc.

### Prior Art

A high density product made from mineral fibers and binder is known in the art, which is painted on the outer surface and used as a facade panel for ventilated and not ventilated facades. The core of the panel is made of mineral fibers, added with binder and compressed in a press. Manufacturing panels with uniformly mixed fibers requires prolonged stirring and consequently reduces the production capacity as such. Panels manufactured with said process are produced strictly as facade panels and may not be used for other purposes, say in construction as a subfloor structure in dry screeds, for producing building thermal insulation panels, in shipbuilding, in soundproof systems and the like. Plates for soundproof panels require rugged and, mare specifically, perforated surfaces

Panels known in the art are produced from mineral fibers and binder, obtained in the mineral wool manufacturing process. Lately, in the production, of thermal insulation materials from mineral fibers, there has been an increasing presence of secondary raw material, consisting of added residues, mainly metal particles and residual organic and inorganic binders. Among fibrous materials in the residual material obtained from rock wool manufacturers, besides basic materials additives are present, which have no influence on the properties of the panels as such, while substantially broadening the field of application of the basic material and simplifying the technological process. Besides additives such as fragments of metal or organic and inorganic binders which are introduced into the process by rock wool manufacturers, other materials may be used as additives in high density thermal insulation panels, especially particles of unfiberized wool, fragments of glass voile, filter and electrofilter powder, and aluminum foil, which have not been employed in prior art products. Said additives have not been used in panels before, which means that panels were produced from pure mineral wool cuttings.

From the published patent application WO 00/73600 A1 a process for manufacturing an insulation panel from mineral fibers having a hard surface layer is known. The panel is made of three layers, the first two thereof having a density between 50 and 300 kg/m³, whereas the third layer has a density of at least 450 kg/m³. With such triple-layer panels, the production of the third hard layer which could yield better mechanical properties is confined to higher vulume weights. When manufacturing triple layer panels the primary layer is cut along the thickness, whereupon the upper layer is compressed. Granulated mineral wool and binder are poured onto the upper layer and voile is added over it. After deposition all three layers together proceed to the hardening chamber. Since all three layers enter the hardening chamber at once, the desired imprint of the upper layer is limited by and dependent on the lower layer. In case a harder upper layer was desired, the density of the mineral wool layers would also rise accordingly, which is to say that individual layers can not be regulated separately to an appreciable degree. With said prior-art triple-layer panel, flammability of the material is an issue as well. Binding the individual layers together requires an increased binder content, and since binders are mostly organic in origin, they consequently make the material more flammable.

The object of the invention is to produce a mineral fiber panel with improved mechanical properties, while making use of granulated mineral fibers and waste fibers, as well as other waste materials.

Said object is achieved according to the appended patent claims.

### Description of the Invention

The invention shall now be described with reference to the embodiments thereof and the accompanying drawings which represent:
Figure 1: An embodiment of the apparatus for manufacturing a panel according to the invention;
Figure 2: A block diagram of the apparatus for manufacturing a panel according to the invention and laying the first, the second, and the third layer, respectively;
Figure 3: A cross section of a double-layer panel with a harder lower layer and a softer upper layer;
Figure 4: A cross section of a triple-layer panel with a harder upper and lower layer and a softer middle layer and with external meshes on both sides;
Figure 5: A cross section of a triple-layer panel with a softer upper and lower layer and a harder middle layer.

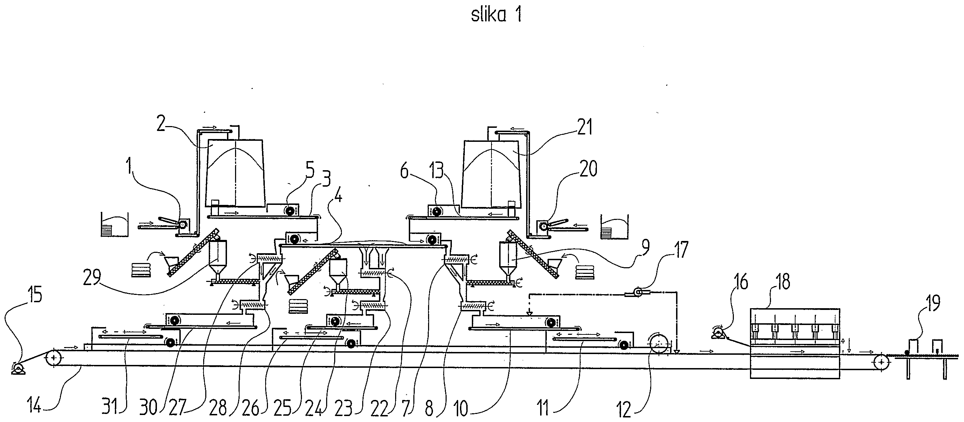

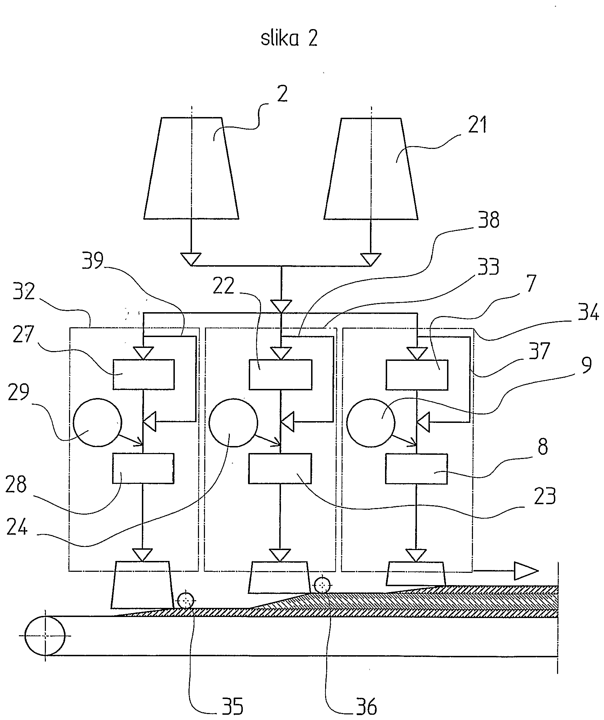

The high density panel of the invention is manufactured according to the technological process and with the apparatus as shown in Figures 1 and 2. The granulated mineral wool, fragments of mineral wool, or mineral wool secondary products are supplied to the process through the device 1, 20 for preparing rock wool fibers. In the devices 1, 20 for preparing rock wool, the pieces of rock wool are broken into granulate which is then transported to the silos 2, 21. From the silos 2, 21 the granulate is dosed onto the conveyor belt 3, 13 with the dosing scales and then proceeds under the straightening roll 5, 6 to the conveyor belt 4 which has the capability of transporting the granulate either to the mixing system for preparing the first layer 32, or to the mixing system for preparing the second layer 33, or to the mixing system for preparing the third layer 34, respectively.

The mixing system for preparing the first layer 32 comprises a first mixer 27 and a second mixer 28. The first mixer 27 of the first mixing system 32 may - optionally be bypassed, feeding the granulate directly to the second mixer 28 of the first mixing system 32. If the granulate is led to mixers 27 and 28, a fiberized granulate is obtained, whereas by bypassing the mixer 27 and leading the granulate along the bypass belt 39, a granulated granulate is obtained. In the mixing system 32 for preparing the first layer, binder may be added through the binder-adding system 29. The quantity and type of binder in the first layer is independent of the quantity and type of binder in other layers. The prepared mixture now proceeds to the silos 30 for preparing the uniformly distributed layer, whereupon the material, via the conveyor belt 31 for depositing the uniform layer, is deposited onto the transport line 14 for preparing the not hardened layer.

The mixing system 33 for preparing the second layer comprises a first mixer 22 and a second mixer 23. The first mixer 22 of the second mixing system 33 may optionally be bypassed, feeding the granulate directly to the second mixer 23 of the second mixing system 33. If the granulate is led to mixers 22 and 23, a fiberized granulate is obtained, whereas by bypassing the mixer 22 and leading the granulate along the bypass belt 38, a granulated' granulate is obtained. In the mixing system 33 for preparing the second layer, binder may be added through the binder-adding system 24. The quantity and type of binder in the second layer is independent of the quantity and type of binder in other layers. The prepared mixture now proceeds to the silos 25 for preparing the uniformly distributed layer, whereupon the material, via the conveyor belt 26 for depositing the uniform layer, is deposited onto the transport line 14 for preparing the not hardened layer.

The mixing system 34 for preparing the third layer comprises a first mixer 7 and a second mixer 8. The first mixer 7 of the third mixing system 34 may optionally be bypassed, feeding the granulate directly to the second mixer 8 of the third mixing system 34. If the granulate is led to mixers 7 and 8, a fiberized granulate is obtained, whereas by bypassing the mixer 7 and leading the granulate along the bypass belt 37, a granulated granulate is obtained. In the mixing system 34 for preparing the third layer, binder may be added through the binder-adding system 9. The quantity and type of binder in the third layer is independent of the quantity and type of binder in other layers. The prepared mixture now proceeds to the silos 10 for preparing the uniformly distributed layer, whereupon the material, via the conveyor belt 11 for depositing the uniform layer, is deposited onto the transport line 14 for preparing the not hardened layer.

Depending on the type of panel to be produced, a layer of granulated granulate - a less fiberized granulate - is first deposited onto the transport line 14 for preparing the not hardened layer, then a layer of fiberized granulate and, lastly, another layer of granulated granulate if desired. If a panel with a more fiberized granulate on the upper and lower side is needed, a layer of fiberized granulate is deposited first, then a layer of granulated granulate is deposited in the middle, and then a layer of fiberized granulate may optionally be deposited on top of it. The deposited layers are compressed with the pressing roll 12 and a mesh may be added optionally onto or into the layer via the lower coating unit 15 or upper coating unit 16. On the transport line 14 for preparing the not hardened layer, panels are pre-formed by means of system 17 for interrupting the layers between individual panels - a gap is made i-n the layer and t-he not hardened layer is rashaped laterally and transversally, whereupon it proceeds to the thermooil-heated hydraulic press 18. The panels then proceed through the slitting unit 19 where they are cut into desired formats.

### Description of the Harder, More Fiberized Layer (40)

To obtain the harder layer, granulate with granules between 20 mm and 5 mm in diameter-is led through the first mixer 27, 22, 7 of the first 32, second 33, or third 34 mixing system, respectively, whereupon binder is added thereto via the binder-adding system 29, 24, 9 into the first 32, second 33, or third 34 mixing system, respectively. The granulate then proceeds to the second mixer 28, 23, 9 of the first 32, second 33, or third 34 mixing system, respectively, where the granulated granulate is fiberized. The fiberized granulate then passes through one or two mixing systems, depending on the type of panel that has to be produced. The binder content in the harder layer is between 3 % and 30 %, preferably between 6 % and 20 %, and most preferably between 10 % and 14 %. Components of organic and inorganic materials may be incorporated in the harder layer in the amount of up to 30 % by weight, preferably up to 10 % by weight, and most preferably up to 5 % by weight. The density of the harder layer is between 500 kg/m³ and 2500 kg/m³, preferably between 700 kg/m³ and 2000 kg/m³, and most preferably between 900 kg/m³ and 1300 kg/m³. Incombustible components preventing flame propagation may be incorporated in the harder layer. The thickness of the layer depends upon the desired application and may amount up to 30 mm, preferably up to 15 mm, and most preferably up to 7 mm. The harder layer generally contains fiberized granulate and a greater amount of binder. Inside or on top of the harder layer a mesh may be inserted with the purpose of reinforcing the panel and preventing same from bursting into pieces in case of a mechanical overload.

### Description of the Softer Layer (41):

To obtain the softer layer, granulate with granules between 20 mm and 5 mm in diameter is led through the second mixer 28, 23, 8 of the first 32, second 33, or third 34 mixing system, respectively, where rock wool particles are granulated to the size of granules. The fiberized granulate passes through one or two mixing systems, depending on the type of panel that has to be produced. The amount of binder in the softer layer, added via the binder-adding system 9, 24, 29, is between 1 % and 20 %, preferably between 3 % and 15 %, and most preferably between 8 % and 12 %. Components of organic and inorganic materials may be incorporated in the softer layer in the amount of up to 30 % by weight, preferably up to 10 % by weight, and most preferably up to 5. % by weight. In the softer layer materials with rather porous surfaces are generally employed. The density of the softer layer is between 250 kg/m³ and 1500 kg/m³, preferably between 500 kg/m³ and 1300 kg/m³, and most preferably between 700 kg/m³ and 1100 kg/m³. Incombustible components preventing flame propagation may be incorporated in the softer layer. The layer thickness deprends upon the desired application and may amount up to 30 mm, preferably up to 15 mm, and most preferably up to 7 mm. The softer layer generally contains granulated granulate which is less fiberized - and a smaller amount of binder. In the triple-layer panel also the upper and lower layer may differ. Inside or on top of the softer layer a mesh may be inserted with the purpose of reinforcing the panel and preventing same from bursting into pieces in case of a mechanical overload.

### The Outer Finishing Layer (42):

The finishing layer on the external surface of the panels having a harder or a softer outer layer may be fashioned from various finishing elements, impregnated decorative papers and other decorative finishing systems and coatings. As finishing elements, plasterboards or similar systems may be attached to the double-layer or triple-layer systems by means of organic or inorganic binders. The external finishing layer may also be made from impregnated decorative papers and laminates. Impregnated papers are coated with a semi-hardened adhesive. The impregnated paper may be thermally heated and then glued to the double-layer or triple-layer panel. The double-layer and triple-layer panels may also be painted. All finishing layers may be applied to one or both of the outer sides and to the edges.

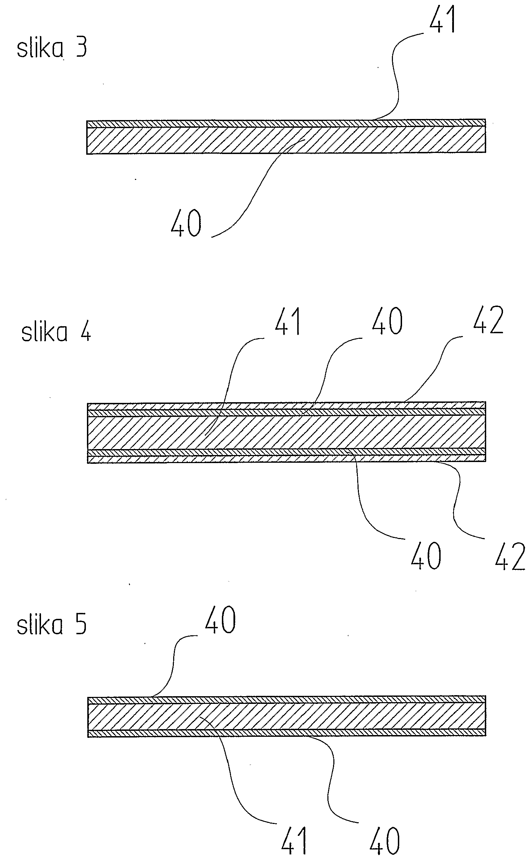

### First Embodiment According to Figure 3:

The mineral fiber granulate and pieces of mineral wool comprising metal particles were fed to the apparatus 1, 20 for preparing rock wool fibers, where the granulate and pieces of mineral wool were evenly ground. The granulate then proceeded to the silos 2, 21. The amount of metal fragments was 0.5 % by weight. The prepared granulate was then led via the conveyor belt 3, 13 with the dosing scales and via the conveyor belt 4 to the first mixer 27 of the first mixing system 32, where the granulate was broken into granules. The granulated granulate then proceeded to the second mixer 28 of the first mixing system 32, where phenol-formaldehyde resin in powder form was added in the amount of 10 % by weight. The powdered phenol-formaldehyde resin was dosed by means of the binder-dosing system 29 in the mixing system 32. The prepared fiberized granulate was then deposited via conveyor belts 30, 31 onto the lower part of the transport line 14 for preparing the not hardened layer. On the layer of fiberized granulate a layer of granulated granulate was deposited, which granulated granulate had been granulated in the second mixer 23 of the second mixing system 33. The granule size of the granulated granulate is at least twice the size of the fiberized granulate. To the granulated granulate powdered phenol-formaldehyde resin was admixed in the amount of 8 % by weight, dosed by the binder-dosing system 24 in the second mixing system 33. Both layers were then fed to the thermooil-heated hydraulic press 18 and hardened for 7 minutes at a temperature of 200° C. After hardening, a panel was obtained having a layer 40 of fiberized granulate 3 mm thick, and a layer 41 of granulated granulate, also 3 mm thick. The panel was 6 mm thick. The panels were slit on the slitting unit 19.

### Second Embodiment According to Figure 4:

The mineral fiber granulate and pieces of mineral wool comprising particles of unfiberized melt were fed to the apparatus 1, 20 for preparing rock wool fibers, where the granulate and pieces of mineral wool were evenly ground. The granulate then proceeded to the silos 2, 21. The amount of unfiberized melt particles was 20 % by weight. The prepared granulate then proceeded via the conveyor belt 3, 13 with the dosing scales and via the conveyor belt 4 to the first mixer 27 of the first mixing system 32, where the granulate was broken into granules. The granulated granulate then proceeded to the second mixer 28 of the first mixing system 32, where 12 % by weight of phenol-formaldehyde resin in powder form and 1 % by weight of a flame arrester were added, dosed by means of the binder-dosing system 29 in the mixing system 32. The prepared fiberized granulate was then deposited via conveyor belts 30, 31 onto the lower part of the transport line 14 for preparing the not hardened layer. On the layer of fiberized granulate a layer of granulated granulate was deposited, which granulated granulate had been granulated in the second mixer 23 of the second mixing system 33 and to which 12 % by weight of phenol-formaldehyde resin in powder form and 1 % by weight of a flame arrester were added, dosed by means of the binder-dosing system 24 in the second mixing system 33. The granule size of the granulated granulate is at least 1.5 times the size of the fiberized granulate. Onto this layer, a layer of fiberized granulate, identical to the layer deposited on the upper side, was deposited, which had been manufactured in the mixing system for preparing the third layer and prepared in the same manner as the lower layer. Thus a triple-layer layer was obtained having a lower layer 40 and an upper layer 40 of fiberized granulate and a middle layer 41 of granulated granulate. In all three layers there were particles of unfiberized melt. Into this layer a mesh 42 was added on the upper and lower side, respectively, via the lower coating unit 15 and upper coating unit 16, whereupon the entire layer composition including the meshes was fed to the thermooil-heated hydraulic press 18 and hardened for 10 minutes at a temperature of 200° C. Each of the layers was 3 mm thick, amounting to an overall thickness of 9 mm. The panels were slit on the slitting unit 19.

### Third Embodiment According to Figure 5:

The mineral fiber granulate comprising 5 % by weight of filter powder was fed to the apparatus 1, 20 for preparing rock wool fibers, where the granulate and pieces of mineral wool were evenly ground. The granulate then proceeded to the silos 2, 21. The prepared granulate then proceeded via the conveyor belt 3, 13 with the dosing scales and via the conveyor belt 4 to the second mixer 28 of the first mixing system 32, where 9 % by weight of phenol-formaldehyde resin in powder form was added, dosed by means of the binder-dosing system 29 in the mixing system 32. The amount of filter powder was 15 % by weight. Thus prepared fiberized granulate was then deposited via conveyor belts 30, 31 onto the lower part of the transport line 14 for preparing the not hardened layer. The other part of the granulate and filter powder was fed to the first mixer 22 of the second mixing system 33, where it was broken into granules. The prepared granulated granulate then proceeded to the second mixer 23 of the second mixing system 33, where 12 % by weight of powdered phenol-formaldehyde resin was added, dosed by the binder-dosing system 24 of the second mixing system 33. The prepared fiberized granulate was then deposited onto a layer of granulated granulate. The granule size of the granulated granulate is at least 2.5 times the size of the fiberized granulate. Onto the layer of fiberized granulate a layer of granulated granulate was deposited, identical in composition to the lower layer and prepared in the mixing system 34 for preparing the third layer. Thus a triple-layer layer was obtained having a middle layer of fiberized granulate and a lower and upper layer of granulated granulate. The layer was hardened in the thermooil-heated hydraulic press 18 for 10 minutes at a temperature of 200° C. The granulated granulate layers were each 3 mm thick, whereas the fiberized granulate layer was 5 mm thick. The overall thickness of the panel was 11 mm. The panels were slit on the slitting unit 19.

Therefore, the multilayer high density mineral fiber panel is characterized in that it is composed of at least two layers, of which at least one is made of' fiberized granulate and at least one is made of granulated granulate, wherein the diameter of the granules of the granulated granulate is from 1.5 to 5 times larger as compared to the granules of the fiberized granulate. To at least one of the layers additional material is added. The additional material may be at least one material selected from the following: filter or electrofilter powder, residues of unfiberized mineral wool, metal particles, residues of organic binders, particles of glass voile, wood cuttings, perlite balls, fragments of aluminum foil, particles of melt. The content of additional materials is between 0.01 % and 30 %. The inventive multilayer panel has a density between 250 kg/m³ and 2,500 kg/m³.

The apparatus for manufacturing multilayer mineral fiber panels comprises at least two mixing systems 32, 33, 34, mounted over a transport line .14, wherein the mixing system 32, 33, 34 comprises a first mixer 27, 22, 7, a bridge system 37, 38, 39 of the first mixer 27, 22, 7, a second mixer 28, 23, 8, a binder-adding system 9, 24, 29 for adding binders and additives into the second mixer 28, 23, 8, and a pressing roll 35, 36, 12 is added to each of the mixing systems. The pressing roll 35, 36, 12 is installed after each of the mixing systems 32, 33, 34 over the transport line 14, spanning the entire breadth thereof.

The process for manufacturing multilayer mineral fiber panels is characterized in that at least part of the mineral fiber granulate is fiberized and at least part of the mineral fiber granulate is granulated in such a manner that the diameter of the granules of the granulated granulate is from 1.5 to 5 times larger as compared to the granules of the fiberized granulate, that binder is added to the fiberized granulate and to the granulated granulate, and that the fiberized granulate and the granulated granulate are sequentially deposited onto the transport line 14 at least once each, and that each deposit on the line 14 is pressed with the rolls 12, 35, 36.

The high density thermal insulation panel may have one or both of the external surfaces perforated or otherwise made uneven so as to absorb/damp sound. The panel may have the outer uneven surfaces made of unfiberied material from rock wool or other materials (such as wood cuttings, fragments of polymeric material waste, perlite balls, metal particles ...). The panel may be- made decorative by painting the borders and surfaces thereof or by impregnating the outer borders and the surface with an impregnating agent. Inside or on top of the high density thermal insulation panel of the invention a mesh may be inserted. The panel may be finished on one or both sides with impregnated paper with melamine resin or other impregnating agent.

Consequently, with the panel according to the invention, the quality of thermal insulation materials and products made from mineral fibers and binder is improved, as the panel allows the utilization of mineral fiber granulate, obtained as a byproduct in the production of thermal insulation materials or mineral fiber products. The panels made of mineral fibers have multiple layers and enable panels to be produced consisting of layers with different hardness, depending on the purpose of utilization. Such multilayer thermal insulation panels from mineral fibers and binder allow the bituminous layer to be glued thereon. The panels may be manufactured with softer or ground-off edges, so that the bituminous layer is not damaged at the seams/junctures. The panels may be produced with a harder core and softer upper and lower layers.

The present invention improves on high density thermal insulation products known in the art, making it possible for improved and multipurpose panels from mineral fibers to be manufactured and enabling waste mineral fibers to be utilized that are obtained as byproducts in prior art production of thermal insulation materials from mineral fibers. Thus an improved multipurpose multilayer panel is produced, also providing a technological solution to the technical problem of waste material, left over from the production of thermal insulation materials from mineral fibers.

## Claims

1. Multilayer high density mineral fiber panel, **characterized in that** it comprises:
- at least one layer made of a mineral wool granulate in the form of a fiberized granulate; and
- at least one layer made of a mineral wool granulate in the form of a granulated granulate;
and the diameter of the granules of the granulated granulate is from 1.5 to 5 times larger as compared to the granules of the fiberized granulate.

2. Multilayer panel according to Claim 1, in which additional material is added to at least one of the layers thereof.

3. Multilayer panel according to Claim 2, in which said additional material is at least one material selected from the following: filter or electrofilter powder, residues of unfiberized mineral wool, metal particles, residues of organic binders, particles of glass voile, wood cuttings, perlite balls, fragments of aluminum foil, particles of melt.

4. Multilayer panel according to Claim 2 or Claim 3, in which the content of the additional material(s) is between 0.01% and 30%.

5. Multilayer panel according to any preceding claim, in which the panel has a density between 250 kg/m³ and 2,500 kg/m³.

6. Multilayer panel according to any preceding claim, in which each mineral wool layer of the multilayer panel consists essentially of a mineral wool granulate and a binder.

7. Multilayer panel according to claim 6, in which one or more layers of the multilayer panel which consists essentially of a mineral wool granulate and a binder comprises at least one additional material selected from the following:
filter or electrofilter powder, residues of unfiberized mineral wool, metal particles, residues of organic binders, particles of glass voile, wood cuttings, perlite balls, fragments of aluminum foil, particles of melt.

8. Apparatus for manufacturing multilayer high density mineral fiber panels in accordance with any of claims 1 to 7, **characterized in that** it comprises at least two mixing systems (32, 33, 34), mounted over a transport line (14), wherein the mixing system (32, 33,34) comprises
- a first mixer (27, 22,7),
- a bridge system (37, 38, 39) of the first mixer (27,22, 7) for optionally bypassing the first mixer (27, 22,7),
- a second mixer (28,23, 8),
- a binder-adding system (9, 24,29) for adding binder into the second mixer (28, 23, 8), and
a pressing roll (35,36, 12).

9. Apparatus for manufacturing multilayer mineral fiber panels according to Claim 8, in which the pressing roll (35, 36, 12) is installed after each of the mixing systems (32, 33,34) over the transport line (14), spanning the entire breadth thereof.

10. Process for manufacturing multilayer high density mineral fiber panels in accordance with any of claims 1 to 7, **characterized in that** at least part of the mineral fiber granulate is fiberized and at least part of the mineral fiber granulate is granulated in such a manner that the diameter of the granules of the granulated granulate is from 1.5 to 5 times larger as compared to the granules of the fiberized granulate, that binder is added to the fiberized granulate and to the granulated granulate, and that the fiberized granulate and the granulated granulate are sequentially deposited onto the transport line (14) at least once each, and that each deposit on the line (14) is pressed with the rolls (12,35, 36).

## Patentansprüche

1. Mehrschichtige, hochdichte Mineralfaserplatte, **dadurch gekennzeichnet, dass** sie umfasst:
- mindestens eine Schicht, die aus einem Mineralwollegranulat in Form eines zerfaserten Granulats hergestellt ist; und
- mindestens eine Schicht, die aus einem Mineralwollegranulat in Form eines gekörnten Granulats hergestellt ist;
und wobei der Durchmesser der Körnchen des gekörnten Granulats verglichen mit den Körnchen des zerfaserten Granulats 1,5- bis 5-mal größer ist.

2. Mehrschichtige Platte nach Anspruch 1, wobei zusätzliches Material zu mindestens einer der Schichten derselben hinzugefügt wird.

3. Mehrschichtige Platte nach Anspruch 2, wobei das zusätzliche Material mindestens ein aus den folgenden ausgewähltes Material ist: Filter- oder Elektrofilterpulver, Rückstände nicht zerfaserter Mineralwolle, Metallpartikel, Rückstände organischer Bindemittel, Glasvoilepartikel, Holzspäne, Perlitkugeln, Aluminiumfolienfragmente, Schmelzpartikel.

4. Mehrschichtige Platte nach Anspruch 2 oder Anspruch 3, wobei der Gehalt des zusätzlichen Materials bzw. der zusätzlichen Materialien zwischen 0,01 % und 30 % beträgt.

5. Mehrschichtige Platte nach einem beliebigen vorhergehenden Anspruch, wobei die Platte eine Dichte zwischen 250 kg/m³ und 2.500 kg/m³ aufweist.

6. Mehrschichtige Platte nach einem beliebigen vorhergehenden Anspruch, wobei jede Mineralwolleschicht der mehrschichtigen Platte im Wesentlichen aus einem Mineralwollegranulat und einem Bindemittel besteht.

7. Mehrschichtige Platte nach Anspruch 6, wobei eine oder mehrere Schichten der mehrschichtigen Platte, die im Wesentlichen aus einem Mineralwollegranulat und einem Bindemittel besteht, mindestens ein aus den folgenden ausgewähltes zusätzliches Material umfassen: Filter- oder Elektrofilterpulver, Rückstände nicht zerfaserter Mineralwolle, Metallpartikel, Rückstände organischer Bindemittel, Glasvoilepartikel, Holzspäne, Perlitkugeln, Aluminiumfolienfragmente, Schmelzpartikel.

8. Einrichtung zur Herstellung von mehrschichtigen, hochdichten Mineralfaserplatten nach einem beliebigen der Ansprüche 1 bis 7, **dadurch gekennzeichnet, dass** sie mindestens zwei Mischsysteme (32, 33, 34) umfasst, die über einem Förderband (14) angebracht sind, wobei das Mischsystem (32, 33, 34) umfasst
- einen ersten Mischer (27, 22, 7),
- ein Brückensystem (37, 38, 39) des ersten Mischers (27, 22, 7) zum optionalen Umgehen des ersten Mischers (27, 22, 7),
- einen zweiten Mischer (28, 23, 8),
- ein Bindemittelzugabesystem (9, 24, 29) zum Zugeben von Bindemittel in den zweiten Mischer (28, 23, 8), und
eine Presswalze (35, 36, 12).

9. Einrichtung zur Herstellung von mehrschichtigen Mineralfaserplatten nach Anspruch 8, wobei die Presswalze (35, 36, 12) hinter jedem der Mischsysteme (32, 33, 34) oberhalb des Förderbands (14) installiert ist, wobei sie sich über die gesamte Breite desselben erstreckt.

10. Verfahren zur Herstellung von mehrschichtigen, hochdichten Mineralfaserplatten nach einem der Ansprüche 1 bis 7, **dadurch gekennzeichnet, dass** mindestens ein Teil des Mineralfasergranulats zerfasert ist und mindestens ein Teil des Mineralfasergranulats derart gekörnt ist, dass der Durchmesser der Körnchen des gekörnten Granulats verglichen mit den Körnchen des zerfaserten Granulats 1,5- bis 5-mal größer ist, dass Bindemittel zu dem zerfaserten Granulat und zu dem gekörnten Granulat zugegeben wird, und dass das zerfaserte Granulat und das gekörnte Granulat jeweils mindestens einmalig nacheinander auf das Förderband (14) abgeschieden werden, und dass jede Abscheidung auf dem Band (14) mithilfe der Walzen (12, 35, 36) gepresst wird.

## Revendications

1. Panneau multicouche de fibres minérales haute densité, **caractérisé en ce qu'**il comprend:
- au moins une couche constituée d'un granulé de laine minérale en forme de granulat fibré; et
- au moins une couche constituée d'un granulé de laine minérale en forme de granulat granulé;
et le diamètre des granulés du granulat granulé est de 1,5 à 5 fois plus grand comparé aux granulés du granulat fibré.

2. Panneau multicouche selon la revendication 1, dans lequel une matière additionnelle est ajoutée à au moins l'une des couches de celui-ci.

3. Panneau multicouche selon la revendication 2, dans lequel ladite matière additionnelle est au moins une matière sélectionnée parmi les suivantes:
poudre filtrante ou d'électrofiltre, résidus de laine minérale non défibrée, particules métalliques, résidus de liants organiques, particules de voile de verre, chutes de bois, billes de perlite, fragments de feuille d'aluminium, particules de matériau fondu.

4. Panneau multicouche selon la revendication 2 ou la revendication 3, dans lequel la teneur en matière/s additionnelles se situe entre 0,01% et 30%.

5. Panneau multicouche selon l'une quelconque revendication précédente, dans lequel le panneau présente une densité entre 250 kg/m³ et 2.500 kg/m³.

6. Panneau multicouche selon l'une quelconque revendication précédente, dans lequel chaque couche de laine minérale du panneau multicouche consiste essentiellement en un granulat de laine minérale et en un liant.

7. Panneau multicouche selon la revendication 6, dans lequel l'une ou plusieurs couches du panneau multicouche qui consiste essentiellement en un granulat de laine minérale et en un liant comprend au moins une matière additionnelle sélectionnée parmi les suivantes: poudre filtrante ou d'électrofiltre, résidus de laine minérale non défibrée, particules métalliques, résidus de liants organiques, particules de voile de verre, chutes de bois, billes de perlite, fragments de feuille d'aluminium, particules de matériau fondu.

8. Appareil de fabrication de panneaux multicouches de fibres minérales haute densité selon l'une quelconque des revendications 1 à 7, **caractérisé en ce qu'**il comprend au moins deux systèmes de mélange (32, 33, 34) assemblés sur une ligne de transport (14), dans lequel le système de mélange (32, 33, 34) comprend
- un premier mélangeur (27, 22,7),
- un système de pont (37, 38, 39) du premier mélangeur (27,22, 7) pour contourner facultativement le premier mélangeur (27,22, 7),
- un deuxième mélangeur (28,23, 8),
- un système d'addition de liant (9, 24,29) destiné à ajouter un liant dans le deuxième mélangeur (28, 23, 8), et
- un cylindre de pressage (35,36, 12).

9. Appareil de fabrication de panneaux multicouches de fibres minérales selon la revendication 8, dans lequel le cylindre de pressage (35, 36, 12) est installé après chacun des systèmes de mélange (32, 33,34) sur la ligne de transport (14), s'étendant sur toute la largeur de celle-ci.

10. Processus de fabrication de panneaux multicouches de fibres minérales haute densité selon l'une quelconque des revendications 1 à 7, **caractérisé en ce qu'**au moins une partie du granulat de fibres minérales est défibré et au moins une partie du granulat de fibres minérales est granulé de telle manière que le diamètre des granulés du granulat granulé est de 1,5 à 5 fois plus grand comparé aux granulés du granulat fibré, **en ce qu'**un liant est ajouté au granulat fibré et au granulat granulé et **en ce que** le granulat fibré et le granulat granulé sont successivement déposés sur la ligne de transport (14) au moins une fois chacun, et **en ce que** chaque dépôt sur la ligne (14) est comprimé avec les cylindres (12, 35, 36).
